# EUROPEAN PATENT APPLICATION

(11) **EP 3 866 227 A1**
(43) Date of publication of application: **18.08.2021**
(21) Application number: 19872923.8
(22) Date of filing: 16.10.2019
(51) Int. Cl.: H01M 4/14, H01M 4/20, H01M 4/68, H01M 4/73, H01M 10/12

(54) **LEAD STORAGE BATTERY**

(30) Priority: 16.10.2018 JP 2018194801
(71) Applicant: GS Yuasa International Ltd., Kisshoin, Minami-ku, Kyoto-shi, Kyoto 601-8520 (JP)
(72) Inventor: SASAKI, Eriko, Kyoto-shi, Kyoto 601-8520 (JP); IMAMURA, Tomohiro, Kyoto-shi, Kyoto 601-8520 (JP)
(74) Representative: Isarpatent
(86) International application number: PCT/JP2019/040719
(87) International publication number: WO 2020/080423

(57) **Abstract**

A lead-acid battery includes: a positive electrode plate; a negative electrode plate; and an electrolyte solution. The positive electrode plate includes a positive current collector and a positive electrode material held by the positive current collector. The positive current collector has a frame rib, a lug provided on the frame rib, and inner ribs inside the frame rib. The frame ribs include an upper element continuous with the lug, a lower element facing the upper element, and a pair of side elements coupling the upper element with the lower element. The inner rib includes a longitudinal rib extending in a first direction from the upper element toward the lower element, and a transverse rib extending in a second direction from one of the side elements toward the other of the side elements. In a cross-section of the positive electrode plate including a cross-section perpendicular to the first direction of the longitudinal rib, a maximum thickness of the positive electrode material from the inner rib to the surface of the positive electrode plate is 0.30 mm or more.

## Description

### TECHNICAL FIELD

The present invention relates to a lead-acid battery.

### BACKGROUND ART

Lead-acid batteries are used in various applications, including automotive, industrial, and other applications. A lead-acid battery is provided with an electrode plate group in which a positive electrode plate and a negative electrode plate are alternately stacked with a separator therebetween. The electrode plate is made up of a current collector and an electrode material held by the current collector.

Patent Document 1 proposes a lead grid plate for a lead-acid battery formed by press-punching a rolled plate of a lead alloy, characterized in that the thicknesses of inner longitudinal and transverse bars are made smaller than the thickness of an outer frame, the thickness of the outer frame is in the range of 0.8 to 1.5 mm, and the thicknesses of the inner bars is in the range of 0.6 to 0.8 mm. Further, Patent Document 1 proposes a lead grid plate for a lead-acid battery characterized in that the inner frame of the lead grid plate obtained by press-punching a rolled plate of a lead alloy having a thickness of 1.2 to 1.5 mm is deformed in the thickness direction to set the thicknesses of the inner longitudinal and transverse bars in the range of 0.6 to 0.8 mm.

In the above lead grid plate, since the thickness of the inner frame is made smaller than the thickness of the outer frame so that the holding surface for an active material is recessed stepwise with respect to the outer frame, the holding amount of the active material per unit lead grid plate can be remarkably increased as compared to a lead grid plate having a uniform thickness, and moreover, the holding force of the active material can be greatly improved without roughening the surface of the lead grid plate.

### PRIOR ART DOCUMENT

### PATENT DOCUMENT

Patent Document 1: JP-A-51-60936

### SUMMARY OF THE INVENTION

### PROBLEMS TO BE SOLVED BY THE INVENTION

On the other hand, further improvement of the electrode plate has been desired from the viewpoint of improving the life performance and the capacity retention ratio of the lead-acid battery.

### MEANS FOR SOLVING THE PROBLEMS

One aspect of the present invention is a lead-acid battery including: a positive electrode plate; a negative electrode plate; and an electrolyte solution. The positive electrode plate includes a positive current collector and a positive electrode material held by the positive current collector. The negative electrode plate includes a negative current collector and a negative electrode material held by the negative current collector. The positive current collector has a frame rib, a lug provided on the frame rib, and inner ribs inside the frame rib. The frame ribs include an upper element continuous with the lug, a lower element facing the upper element, and a pair of side elements coupling the upper element with the lower element. The inner rib includes a longitudinal rib extending in a first direction from the upper element toward the lower element, and a transverse rib extending in a second direction from one of the side elements toward the other of the side elements. A striped pattern of a metallic fibrous structure is observed in a cross-section perpendicular to the first direction of the longitudinal rib. An outer peripheral region of the cross-section is made up of a first portion in which the fibrous structure extends along a contour of the cross-section and a second portion except for the first portion. In a cross-section of the positive electrode plate including the cross-section, a maximum thickness of the positive electrode material from the first portion to the surface of the positive electrode plate is 0.30 mm or more.

### ADVANTAGES OF THE INVENTION

According to the present invention, the life performance and the capacity retention ratio of the lead-acid battery can be improved.

### BRIEF DESCRIPTION OF THE DRAWINGS

Fig. 1A is a cross-sectional conceptual view showing the thickness of a positive electrode material in a positive electrode plate of a lead-acid battery according to one embodiment of the present invention.
Fig. 1B is a cross-sectional conceptual view showing the thickness of a positive electrode material in a positive electrode plate of a lead-acid battery according to another embodiment of the present invention.
Fig. 2A is a plan view showing an appearance of a current collector for a lead-acid battery according to one embodiment of the present invention.
Fig. 2B is a plan view showing an appearance of a current collector for a lead-acid battery according to another embodiment of the present invention.
Fig. 3A is a cross-sectional photograph of a longitudinal rib perpendicular to a first direction.
Fig. 3B is a conceptual view of a section C.
Fig. 4 is a cross-sectional photograph of an inner rib in which a cross-section of a fibrous structure is seen.
Fig. 5 is a cross-sectional conceptual view showing the progress of corrosion of an inner rib.
Fig. 6 is a perspective view showing an appearance of a lead-acid battery according to one embodiment of the present invention.
Fig. 7 is a graph showing the relationship between the maximum thickness of the positive electrode material from a first portion to the surface of the positive electrode plate and a five-hour-rate capacity retention ratio.
Fig. 8 is a graph showing the relationship between the maximum thickness of the positive electrode material from the first portion to the surface of the positive electrode plate and light-load life performance.
Fig. 9 is a graph showing the relationship between a second-portion rate of a longitudinal rib and the five-hour-rate capacity retention ratio.
Fig. 10 is a graph showing the relationship between the second-portion rate of the longitudinal rib and the light-load life performance.
Fig. 11 is a graph showing the relationship between the minimum thickness of the positive electrode material from the first portion to the surface of the positive electrode plate and the utilization factor of the positive electrode material.

### MODE FOR CARRYING OUT THE INVENTION

A current collector for a lead-acid battery according to one aspect of the present invention has a frame rib, lugs provided on the frame rib, and an inner rib inside the frame rib. The inner ribs may have a net shape. The frame rib 110 includes an upper element 111 continuous with a lug 130, a lower element 112 facing the upper element 111, and a pair of side elements 113 and 114 coupling the upper element 111 with the lower element 112. The inner ribs include a longitudinal rib extending in a first direction from the upper element toward the lower element, and a transverse rib extending in a second direction from one side element toward the other side element. The first direction is a direction parallel to the side element, and the second direction is a direction parallel to the upper element and the lower element. Note that the current collector is also referred to as a grid body. However, the rib frame of the current collector or the grid body is not limited to a grid shape or a net shape. The frame rib may have a rectangular shape.

The cross-section of the longitudinal rib perpendicular to the first direction, that is, the cross-section parallel to the upper element and parallel to the thickness direction (hereinafter also referred to as section C), shows a striped pattern of a metallic fibrous structure. The outer peripheral region of the section C is made up of a first portion in which the fibrous structure (direction of stripes) extends along the contour (hereinafter also referred to as a contour C) of the section C, and a second portion except for the first portion. The contour of the section C means a line corresponding to the outer surface of the longitudinal rib. The outer peripheral region of the section C is a peripheral region along the contour of the section C, has a depth of at least 55 pm or more from a line corresponding to the outer surface, and preferably has a depth of 100 pm or more.

As a measure for improving the capacity retention ratio and the life characteristics of the lead-acid battery, it is conceivable to prevent the falling-off of the positive electrode material. Specifically, preventing cracks in the positive electrode material that may occur during the curing of the positive electrode plate is considered to be effective in preventing the falling-off of the positive electrode material.

Here, in order to effectively prevent cracks in the positive electrode material during curing, a maximum thickness (T) of the positive electrode material from the first portion to the surface of the positive electrode plate in the cross-section of the positive electrode plate including the section C may be set to 0.30 mm or more. The T value is preferably 0.31 mm or more, and more preferably 0.40 mm or more. The cracks in the electrode material are cracks having been generated at the corners of the grid body due to shrinkage of the electrode material (active material) during curing and reached the surface of the electrode plate through the active material. By setting the maximum thickness of the positive electrode material from the first portion to the surface of the positive electrode plate to 0.30 mm or more, the distance until the cracks generated at the corners of the grid body reach the surface of the electrode plate becomes long, and the cracks reaching the surface of the electrode plate are reduced. As a result, the falling-off of the electrode material is prevented, and the life performance (e.g., light-load life characteristic) and the capacity retention ratio (e.g., five-hour-rate capacity retention ratio) of the lead-acid battery can be improved.

Note that the T value is a concept different from the minimum thickness of the positive electrode material from the current collector to the surface of the positive electrode plate (a general concept of over-paste). In general, the over-paste means the minimum thickness of the positive electrode material from the current collector to the surface of the positive electrode plate regardless of the shape of the current collector. Generally, it is conceivable that the smaller the amount of over-paste, the more easily the positive electrode plate deteriorates, and the greater the decrease in capacity due to repeated cycles. On the other hand, the T value is the maximum thickness of the positive electrode material from the first portion where the fibrous structure extends along the contour of the section C to the surface of the positive electrode plate. By setting the maximum thickness T to 0.3 mm or more, cracks are hardly generated on the surface of the positive electrode material of the positive electrode plate during curing. Therefore, the positive electrode material can be remarkably prevented from falling off without being greatly affected by the amount of over-paste. When the maximum thickness T is 0.3 mm or more, it is conceivable that the adhesion between the positive electrode material and the current collector is remarkably improved at least in the positive electrode plate during curing. The above findings have been clarified by the embodiment of the present invention, and the above effects cannot be achieved only by controlling the over-paste.

When the corrosion of the positive current collector is reduced, the elongation of the current collector is prevented, so that the falling-off of the positive electrode material can be prevented more effectively. From the viewpoint of reducing the corrosion of the positive current collector, in the cross-section of the positive electrode plate including the section C of the current collector, the minimum thickness (t) of the positive electrode material from the first portion to the surface of the positive electrode plate is preferably 0.1 mm or more, and more preferably 0.2 mm or more. When the elongation of the current collector is reduced by controlling the minimum thickness t and the falling-off of the positive electrode material is prevented by controlling the maximum thickness T in a synergistic manner, the light-load life performance and the capacity retention ratio are further improved. Note that it is difficult to make the minimum thickness t less than 0.1 mm in manufacturing.

The minimum thickness t of the positive electrode material from the first portion to the surface of the positive electrode plate is preferably 0.5 mm or less. When the minimum thickness t is 0.5 mm or less, good conductivity between the current collector and the positive electrode material is ensured, and the utilization factor of the positive electrode material is enhanced. In addition, over-paste hardly becomes excessive, and the positive electrode plate can be easily manufactured. Note that the relationship between the maximum thickness T and the minimum thickness t of the positive electrode material from the first portion to the surface of the positive electrode plate naturally satisfies T > t.

In the second portion, no striped pattern may be observed, and a striped pattern extending in the depth direction of the outer peripheral region may be observed. Here, a percentage (hereinafter also referred to as a first-portion rate) of the contour (hereinafter also referred to as a first contour part) corresponding to the first portion to the total length of the contour C is preferably 50% or more. That is, a percentage (hereinafter also referred to as a second-portion rate) of the contour (hereinafter also referred to as the second contour part) corresponding to the second portion to the total length of the contour C is preferably less than 50%, and more preferably 40% or less. A cross-section perpendicular to the fiber length of the fibrous structure is easily exposed on the outer surface of the second portion. When the second-portion rate is made smaller, the cross-section perpendicular to the fiber length of the fibrous structure is less likely to be exposed on the outer surface of the outer peripheral region of the section C.

The cross-section perpendicular to the fiber length of the fibrous structure has many grain boundaries. Thus, in the second portion, the corrosion of the longitudinal rib is likely to proceed deep in a wedge shape. As corrosion proceeds deep, the current collector tends to elongate. On the other hand, in the first portion, the corrosion of the longitudinal rib is likely to proceed shallow. The elongation of the current collector due to shallow corrosion is small. That is, even when the amount of corrosion is the same, with a smaller second-portion rate, the corrosion is less likely to proceed to the deep region of the current collector, the elongation of the current collector is reduced, and the falling of the electrode material is prevented. By setting the second-portion rate to 40% or less, the elongation of the current collector is reduced more remarkably. In addition to the prevention of the falling of the electrode material and the reduction in the elongation of the current collector by controlling the maximum thickness T and the minimum thickness t, the effect of reducing the elongation of the current collector by controlling the second-portion rate to be less than 50% is superimposed, whereby the light-load life performance and the capacity retention ratio can be improved further remarkably.

In the cross-section perpendicular to the second direction of the transverse rib, that is, the cross-section parallel to the side element and parallel to the thickness direction (hereinafter also referred to as a section G), a striped pattern of a metallic fibrous structure is hardly seen, and generally, a cross-section perpendicular to the fiber length of fibrous structure is seen. The outer peripheral region of the section G usually has almost the entire circumference as the second portion. In the outer peripheral region of the section G, shallow corrosion proceeds, so that the elongation of the current collector is reduced.

When the second-portion rate is less than 50% (preferably 40% or less), the degree of progress of corrosion tends to be uniform throughout the inner ribs. It is considered probable that by making the corrosion uniform in this manner, the uneven distribution of corroded portions is prevented, and the unidirectional elongation of the current collector is prevented.

Here, the first-portion rate and the second-portion rate are intentionally controllable. Even when the longitudinal rib originally has a large second-portion rate, it is possible to deform the longitudinal rib so that the second portion is covered with the first portion. For example, when the longitudinal rib is to be deformed by pressing, the first-portion rate can be arbitrarily controlled by the speed of a press, the pressure of the press, the shape of the die, or the like. That is, deforming the longitudinal rib by pressing is not a sufficient condition for increasing the first-portion rate, and it is necessary to appropriately control the pressing condition. When the first-portion rate is increased, the elongation of the current collector is reduced, and the falling of the electrode material is prevented.

As described above, the current collector for a lead-acid battery according to the embodiment of the present invention can be manufactured by a manufacturing method including pressing an intermediate rib which is a precursor of the inner rib. Such a manufacturing method includes, for example, (i) a step of preparing a rolled plate, (ii) a step of punching the rolled plate to form an intermediate grid body having a plurality of intermediate ribs formed in a grid shape, and (iii) a step of pressing the intermediate grid body from a thickness direction of the intermediate grid body to form at least some of the inner ribs. Here, the pressing includes deforming at least some of the plurality of intermediate ribs so that at least one end in a rib width direction intersecting with the extending direction of each of the intermediate ribs (e.g., orthogonal to the stretching direction) is thinner than a center in the rib width direction.

Further, the lead-acid battery according to the embodiment of the present invention includes the steps of, by the above method: preparing the positive current collector to obtain the positive electrode plate including the positive current collector; and preparing the negative current collector to obtain the negative electrode plate including the negative current collector. In the step of obtaining the positive electrode plate, the positive electrode material is supported so that the maximum thickness of the positive electrode material from the first portion in the cross-section of the positive electrode plate to the surface of the positive electrode plate is 0.30 mm or more.

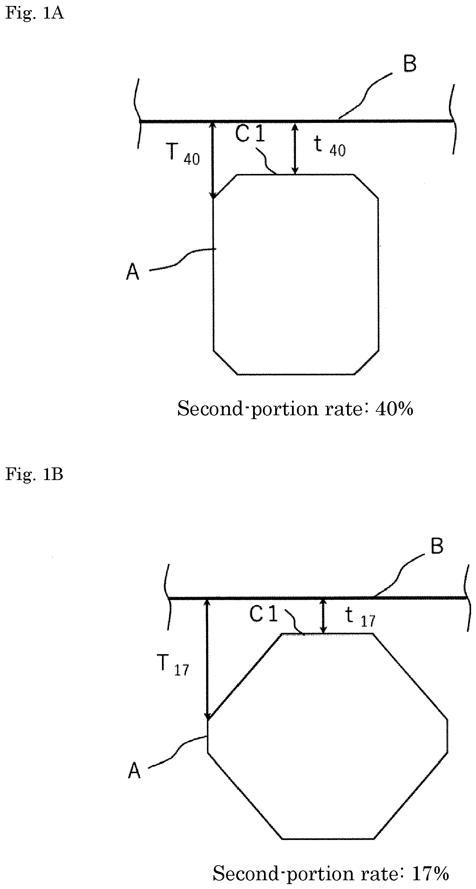

Figs. 1A and 1B are conceptual views showing the maximum thickness of the positive electrode material from the first portion to the surface of the positive electrode plate in the cross-section of the positive electrode plate. The maximum thickness of the positive electrode material from an inner rib A to a surface B of the positive electrode plate is a distance denoted by T. The minimum thickness of the positive electrode material from a first portion C1 to the surface B of the positive electrode plate is a distance indicated by t. The cross-sectional shape of the inner rib is preferably octagonal and can take any symmetrical or asymmetrical shape.

Fig. 1A shows a longitudinal rib with a second-portion rate of the contour C of 40%, the maximum thickness of the positive electrode material from the inner rib A to the surface B of the positive electrode plate is denoted by T₄₀, and the minimum thickness of the positive electrode material from the first portion C to the surface B of the positive electrode plate is denoted by t₄₀,

Fig. 1B shows a longitudinal rib with a second-portion rate of the contour C of 17%, the maximum thickness of the positive electrode material from the inner rib A to the surface B of the positive electrode plate is denoted by T₁₇, and the minimum thickness of the positive electrode material from the first portion C to the surface B of the positive electrode plate is denoted by t₁₇,

The T value and the t value can be obtained by observing the cross-section of the positive electrode plate in a resin-filled state. Specifically, a fully charged lead-acid battery is disassembled, and the positive electrode plate is taken out. Next, the positive electrode plate having been taken out is washed with water to remove the electrolyte solution and dried. Thereafter, the entire positive electrode plate is impregnated with a vinyl ester resin or an epoxy resin and cured. A predetermined place is cut in a cured state, and the cut cross-section is polished. The polished cross-section is observed using a metallurgical microscope. For example, the T value and t value may be determined by observing a plurality of arbitrary points (at least three or more), determining respective T values and t values, and then taking average values of those values.

That the fibrous structure (direction of stripes) extends along the contour of the section C in the first portion refers to the following state: First, the inside of the frame rib of the current collector is cut into three equal sections: an upper region on the upper element side of the frame rib; a lower region on the lower element side of the frame rib; and a middle region between the upper region and the lower region. At this time, in a plurality of longitudinal ribs, four rows of the sections C perpendicular to the first direction (parallel to the upper element and parallel to the thickness direction) are formed. That is, one row of the sections C is formed in each of the upper region and the lower region, and two rows of the sections C are formed in the middle region. When the trisection dividing line corresponds to the intersection of the longitudinal and transverse ribs, the current collector may be divided into three sections with the dividing line slightly shifted in whole or in part so that the section C is formed in the longitudinal rib portion between the intersections as much as possible. When the inside of the frame rib of the current collector is divided into three sections, the dimension of the lug or foot is not considered.

Next, from any two rows out of the four rows, a plurality of sections C to be observed (at least 60% or more of the sections C included in the two rows) are selected A portion of the outer peripheral region of the selected section C in which the stripes of the fibrous structure have an angle of less than 45° with the contour of the section C is the first portion. Specifically, at an arbitrary point P on the contour C of each section C, a tangent S1 of the point P is drawn, and a perpendicular L of the tangent S1 is drawn so as to pass through the point P. Next, a tangent S2 of a stripe existing at a depth of 55 µm from the point P on the perpendicular L and intersecting the perpendicular L is drawn at the intersection. When an angle θ between the tangent S2 and the tangent S1 is less than 45°, the point P constitutes a first contour part corresponding to the first portion. Such observation is appropriately performed on the contour C, the length of the first contour part is specified, and the percentage of the first contour part to the total length of the contour C is determined as a first-portion rate. When the angle θ is 45° or more, the point P constitutes the second portion. Even when it cannot be determined whether or not the point P constitutes the first contour part because the fibrous structure cannot be observed, the point P constitutes the second portion. The first-portion rate is determined for all selected sections C, and the average is calculated.

When the cut portion is the intersection of the longitudinal rib and the transverse rib (node), the average may be obtained excluding the cross-section, and the cut position of the longitudinal rib may be shifted so as to be off the node.

In the formation of the section C, a current collector before being filled with the electrode material may be used. Alternatively, a battery in a fully charged state is disassembled, an electrode plate is taken out and washed with water to remove an electrolyte solution, and the electrode plate is dried. Subsequently, the electrode material is removed from the electrode plate, and the electrode material adhering to the surface of the current collector is removed by mannitol. After the whole of the prepared current collector is taken out and covered with a thermosetting resin to be cured, the current collector may only be cut together with the cured resin. The state of the metallic structure in the section C may only be observed by performing etching on the cross-section of the current collector and photographing with a microscope.

Note that the lead-acid battery in the fully charged state refers to a chemically converted lead-acid battery having been fully charged. So long as after chemical conversion, the lead-acid battery may be fully charged immediately after chemical conversion or after a lapse of time from chemical conversion. For example, a chemically converted lead-acid battery in use (preferably at the initial stage of use) may be fully charged. The battery at the initial stage of use refers to a battery that has not been used for a long time and has hardly deteriorated.

In the present specification, in the case of a flooded-type battery, the fully charged state of the lead-acid battery is a state where in a water bath at 25°C ± 2°C, the constant current charge is performed at a current (A) 0.2 times a numerical value indicated as a rated capacity (Ah) until 2.5 V/cell is reached, and thereafter, the constant current charge is performed at a current (A) 0.2 times the numerical value indicated as the rated capacity (Ah) for two hours. In the case of a valve regulated battery, the fully charged state of the lead-acid battery is a state where a constant current constant voltage charge of 2.23 V/cell is performed in an air bath at 25°C ± 2°C at a current 0.2 times a numerical value indicated as the rated capacity (Ah), and charge is completed when the charge current at the constant voltage charge becomes 0.005 times the numerical value indicated as the rated capacity (Ah).

The thickness of the first portion may only be 55 pm or more. Even when the outer peripheral region appears at a glance as the first portion, in a case where the thickness of the region in which the striped pattern of the fibrous structure is observed is 55 pm or less, the outer peripheral region is regarded not as the first portion but as the second portion. The first portion having a thickness of 55 pm or more has a sufficient action to prevent penetration of corrosion to the inside. In this case, the penetration of corrosion to the inside is likely to become highly uniform throughout the inner ribs. Therefore, the elongation of the grid current collector is remarkably reduced, and the falling of the electrode material is also remarkably prevented. From the viewpoint of further improving the prevention of corrosion-resistant corrosion of the longitudinal rib from penetrating to the inside, the thickness of the first portion is preferably 100 pm or more.

The thickness of the inner rib may only be, for example, from 0.7 mm to 3 mm. The thickness of the inner rib is the length of the inner rib in the thickness direction of the grid body or the electrode plate. When the thickness of the inner rib is 0.7 mm or more, the effect of preventing corrosion is enhanced, and when the thickness is 3 mm or less, the holding force of the electrode material by the current collector is enhanced to easily prevent the falling of the electrode material. In the case of a relatively thick punched grid body of 0.7 mm or more, generally, the percentage of the second contour part to the contour C tends to be high. Even when the percentage of the second contour part is high as described above, it is not difficult to reduce the second-portion rate to less than 50%, or even to 40% or less, by pressing or the like.

The rib width of the inner rib may only be, for example, from 0.7 mm to 3 mm. The rib width of the inner rib is a width perpendicular to the length direction of the inner rib in the surface direction of the current collector or the electrode plate. When the rib width of the inner rib is 0.7 mm or more, the effect of preventing corrosion becomes large, and the disconnection of the inner rib can be easily avoided even at the time of overcharge. Further, when the rib width of the inner rib is 3 mm or less, the filling property of the electrode material into the current collector is enhanced, and the productivity of the electrode plate is improved.

For sufficiently preventing corrosion, the second-portion rate is more preferably 30% or less. Even when the second-portion rate becomes smaller than 50%, the corrosion of the longitudinal rib cannot be prevented completely. However, when the corrosion is made uniform, the uneven distribution of the corroded portion is prevented, and the unidirectional elongation of the current collector is prevented.

The shape of the section C is not particularly limited but is preferably octagonal. When the section C is an octagon, the inner angle of the apex does not become excessively small, and the effect of preventing corrosion near the apex is enhanced. In order to form a longitudinal rib having an octagonal section C, for example, a longitudinal rib having a rectangular section C may only be deformed. The method for deforming the longitudinal rib is not particularly limited, but for example, the inner rib may only be pressed. In this case, the pressing conditions of the inner ribs may only be appropriately selected so that the second-portion rate is less than 50%, preferably not more than 40%. Forming the section C into an octagonal shape facilitates an increase in the percentage of the length of the first contour part to the total length of the contour C. Here, the octagonal shape does not have to be a strictly octagonal shape in the mathematical sense, and the apex may be slightly rounded, or each side may be bent slightly.

When the current collector is a current collector punched out of a stretched sheet of lead or a lead alloy, a total length WLW of the inner dimensions of the transverse rib and a total length WLH of the inner dimensions of the longitudinal rib may satisfy WLH/LW ≥ 0.8 and may satisfy WLH/WLW ≥ 1.3. In this case, the corrosion of the current collector tends to penetrate to the inside, and hence the elongation of the current collector is reduced more remarkably by controlling the first-portion rate to be 50% or more. Here, the inner dimension length of each inner rib means the length in the inner dimension of the grid square, that is, the length (bar length) of the side of a rectangular space defining the grid square. Note that the direction of the length WLW (a direction in which the transverse rib extends) usually corresponds to the extending direction of the stretched sheet (machine direction (MD)).

The current collector according to the present invention may be applied to either a positive electrode plate or a negative electrode plate. That is, the electrode plate according to the present invention can be either the positive electrode plate or the negative electrode plate. However, the current collector according to the present invention is particularly suitable as a current collector for the positive electrode plate from the viewpoint of reducing the elongation of the current collector due to its corrosion

The current collector according to the present invention may only be a punched current collector, and the punched current collector may be formed from, for example, a stretched sheet of lead or a lead alloy.

Hereinafter, embodiments of the present invention will be described with reference to the drawings.

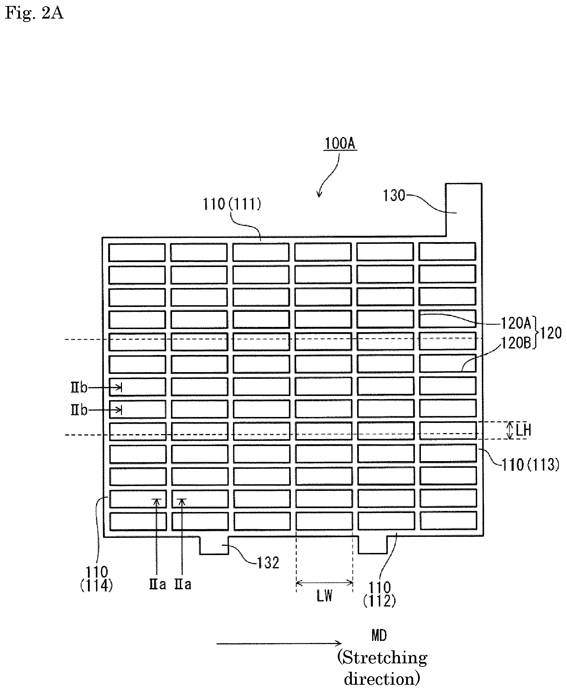

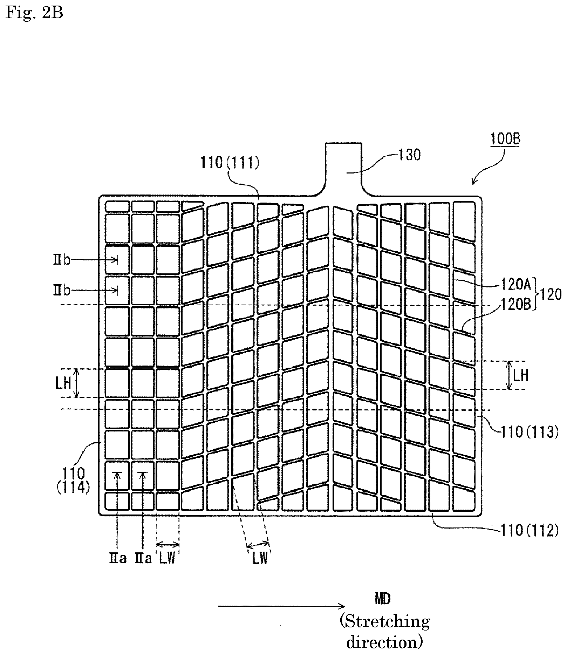

Figs. 2A and 2B are plan views showing the appearance of current collectors 100A and 100B according to one embodiment and another embodiment of the present invention, respectively. Each of the current collectors 100A and 100B has a frame rib 110 and net-like inner ribs 120 inside the frame rib 110. The frame rib 110 includes an upper element 111 continuous with a lug 131, a lower element 112 facing the upper element 111, and a pair of side elements 113 and 114 coupling the upper element 111 with the lower element 112. Dashed lines indicate the boundaries that divide the inner ribs into three equal sections: upper, middle, and lower regions. The current collector 100A of Fig. 2A has a lower protrusion (also referred to as a foot) 132 continuous with the lower element 112. In the current collector 100B of Fig. 2B, the transverse rib extends obliquely with respect to the upper or lower element. LH indicates the inner dimension length per grid of the longitudinal rib, and LW indicates the inner dimension length per grid of the transverse rib.

The current collectors 100A and 100B are, for example, grid bodies punched out of stretched sheets of lead or a lead alloy, and the extending direction is a direction indicated by an arrow MD in Fig. 2. The section C of a longitudinal rib 120A is a cross-section at line IIa-IIa in Fig. 2, and the section G of a transverse rib 120B is a cross-section at line IIb-IIb. The metallic structure of the stretched sheet easily forms a layered or fibrous structure extending in the extending direction. Hence a striped pattern is generated in the section C. On the other hand, in the section G, a pattern due to the cutting of a layered or fibrous structure can occur.

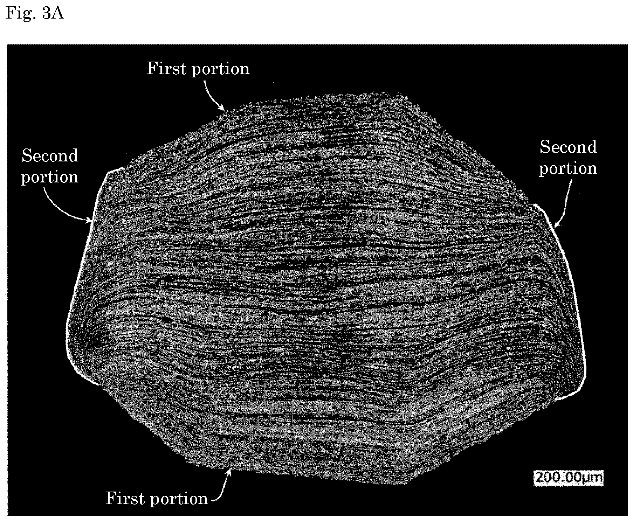

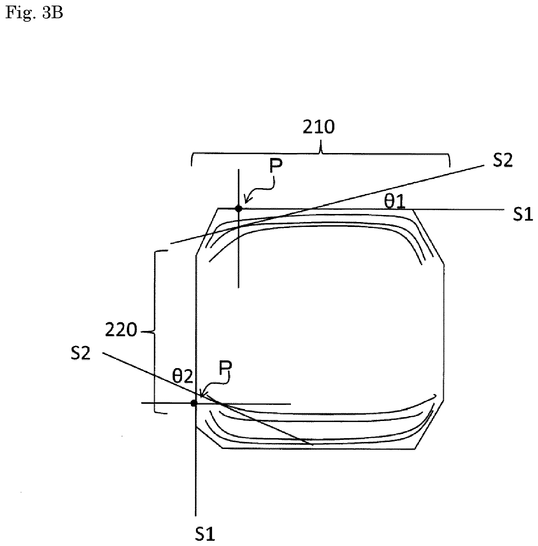

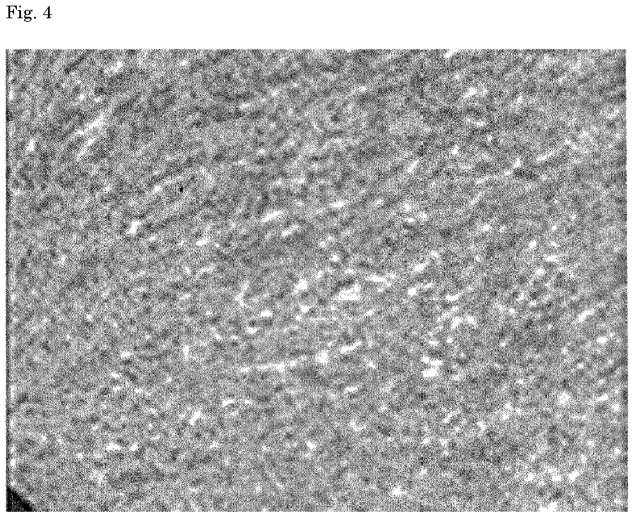

Fig. 3A is an example of a photograph of the section C of the longitudinal rib 120A, and the cross-section has an octagonal shape and shows the striped pattern of the metallic fibrous structure. Fig. 3B is a conceptual view of an example of an octagonal section C imitating Fig. 3A. On the other hand, Fig. 4 is an example of a photograph of the section G of the transverse rib 120B, and the cross-section has a pattern formed by a cross-section perpendicular to the fiber length of the metallic fibrous structure. In Fig. 3B, most of the left and right sides of the octagonal section C are a second portion 220, and the other outer peripheral region is a first portion 210. In the first portion 210, the stripe (tangent S2) of the fibrous structure has an angle θ1 of less than 45° with the contour (line S1) of the section C. On the other hand, in the second portion 220, no stripe of the fibrous structure can be confirmed, or the stripe (tangent S2) has an angle θ2 exceeding 45° with the contour (line S1) of the section C. In Fig. 3A, there is a region in the outermost layer of the second portion 220 where a striped pattern of a fibrous structure having a thickness of less than about 55 µm is observed, but such a thin portion does not constitute the first portion 210.

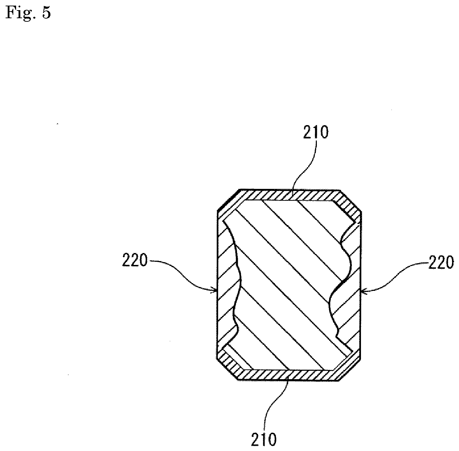

Fig. 5 is a conceptual view of the section C showing the progress of corrosion of the inner rib. A portion where the shallow corrosion layer has been formed is the first portion where the fibrous structure extends along the contour of the outer peripheral region, and even when corrosion proceeds, the corrosion layer is hardly formed deep. On the other hand, peeling tends to occur near the interface between the current collector and the electrode material. It is thus considered that the stress of the current collector trying to deform is easily relaxed. On the other hand, a portion where a wedge-shaped deep corrosion layer has been formed is the second portion. When a deep corrosion layer is formed, non-uniform deformation of the current collector easily occurs, the current collector elongates, and the electrode material easily falls off.

Next, the electrode plate of the lead-acid battery will be described. The electrode plate for the lead-acid battery according to the present invention includes the current collector described above and an electrode material held by the current collector. Although the electrode material is a portion except for the current collector, when a mat mainly made of nonwoven fabric is stuck to the electrode plate, the mat is not included in the electrode material. However, the thickness of the electrode plate is a thickness including the mat. This is because the mat is used integrally with the electrode plate. However, when the mat is stuck to the separator, the thickness of the mat is included in the thickness of the separator.

The density of the electrode material may only be, for example, 3.6 g/cm³ or more. From the viewpoint of ensuring a sufficient initial capacity, the electrode material density is preferably 4.8 g/cm³ or less. However, at the second-portion rate exceeding 40% (the first-portion rate being less than 60%), the electrode plate easily cracks when the electrode material density becomes 4.4 g/cm³ or more. Thus, for example, when the discharge is repeated at about a five-hour rate, the deterioration may proceed, or the charge acceptance property after overcharge may be lowered. On the other hand, at the second-portion rate being less than 40% (the first-portion rate being 60% or more), even when the electrode material density is as high as 4.4 g/cm³ or more, a crack is hardly generated in the electrode plate, and deterioration in the case of repeated discharge and deterioration in the charge acceptance property after overcharge are prevented.

The density of the electrode material means the value of the bulk density of the chemically converted electrode material in the fully charged state and is measured as follows. The battery after chemical conversion or in use (preferably at the initial stage of use) is fully charged and then disassembled, and the obtained electrode plate is washed with water and dried to remove an electrolyte solution in the electrode plate. (The washing with water is performed until it is confirmed that the color of the pH test paper does not change by pressing the pH test paper against the surface of the negative electrode plate washed with water. However, the washing with water is performed within two hours. The negative electrode plate washed with water is dried at 60°C ± 5°C in a reduced pressure environment for about six hours. The positive electrode plate washed with water is dried at 60°C ± 5°C for about 6 hours. When the sticking member is included in the electrode plate after drying, the sticking member is removed from the electrode plate by peeling). Next, the electrode material is separated from the electrode plate to obtain an uncrushed measurement sample. A sample is charged into a measurement case and evacuated, which is then filled with mercury at a pressure of 0.5 psia to 0.55 psia (≈ 3.45 kPa or more and 3.79 kPa or less) to measure the bulk volume of the electrode material, and the mass of the measurement sample is divided by the bulk volume to determine the bulk density of the electrode material. A volume obtained by subtracting the injection volume of mercury from the volume of the measurement case is defined as the bulk volume.

The density of the electrode material can be measured using an automatic porosimeter (Auto Pore IV 9505) manufactured by Shimadzu Corporation.

### (Negative electrode plate)

The negative electrode plate of the lead-acid battery is made up of a negative current collector and a negative electrode material. A negative electrode grids for a large lead-acid battery may be formed by casting lead (Pb) or a lead alloy.

As the lead or the lead alloy used for the current collector, a Pb-Sb alloy, a Pb-Ca alloy, a Pb-Ca-Sn alloy, lead having a purity of three nines or higher, and the like are used preferably. The lead or lead alloy may further contain Ba, Ag, Al, Bi, As, Se, Cu, or the like as an additive element. The negative current collector may have a plurality of lead alloy layers having different compositions.

The negative electrode material contains, as an essential component, a negative active material (lead or lead sulfate), which exhibits a capacity by an oxidation-reduction reaction, and can contain an organic expander, a carbonaceous material, and an additive such as barium sulfate. The negative active material in a charged state is spongy lead, but a non-chemically converted negative electrode plate is usually prepared using a lead powder.

At least one kind selected from the group consisting of lignins and/or synthetic organic expanders may be used as the organic expander. Examples of the lignins include lignin and lignin derivatives. Examples of the lignin derivative include lignin sulfonic acid or its salt (alkali metal salt such as sodium salt). The organic expander is an organic polymer containing a sulfur element and generally contains a plurality of aromatic rings in the molecule and the sulfur element as a sulfur-containing group. Among the sulfur-containing groups, a sulfonic acid group or a sulfonyl group, which is a stable form, is preferred. The sulfonic acid group may be present in an acid form or in a salt form like a Na salt.

As a specific example of the organic expander, a condensate obtained using an aldehyde compound (aldehyde or its condensate such as formaldehyde), which is a compound having a sulfur-containing group and an aromatic ring, is preferable. Examples of the aromatic ring include a benzene ring and a naphthalene ring. When the compound having an aromatic ring has a plurality of aromatic rings, the plurality of aromatic rings may be coupled by direct bonding or a coupling group (e.g., alkylene group, sulfone group, etc.). Examples of such a structure include biphenyl, bisphenylalkane, and bisphenylsulfone. Examples of the compound having an aromatic ring include a compound having the aromatic ring described above and a hydroxy group and/or an amino group. The hydroxy group and the amino group may be directly bonded to the aromatic ring or may be bonded as an alkyl chain having the hydroxy group or the amino group. The compound having an aromatic ring is preferably a bisphenol compound, a hydroxybiphenyl compound, a hydroxynaphthalene compound, a phenol compound, or the like. The compound having an aromatic ring may further have a substituent. The organic expander may contain one kind of residues of these compounds or may contain a plurality of kinds thereof. The bisphenol compound is preferably bisphenol A, bisphenol S, bisphenol F, or the like.

The sulfur-containing group may be directly bonded to the aromatic ring contained in the compound and may, for example, be bonded to the aromatic ring as an alkyl chain having the sulfur-containing group.

Further, for example, a condensate obtained using an aldehyde compound of the compound having the aromatic ring described above and a monocyclic aromatic compound (aminobenzenesulfonic acid, alkylaminobenzenesulfonic acid, phenolsulfonic acid, or its substituent) may be used as the organic expander.

The content of the organic expander contained in the negative electrode material is, for example, preferably 0.01% by mass or more, more preferably 0.02% by mass or more, and still more preferably 0.05% by mass or more. On the other hand, the content is preferably 1.0% by mass or less, more preferably 0.8% by mass or less, and still more preferably 0.5% by mass or less. These lower and upper limits can be combined arbitrarily. Here, the content of the organic shrinkage inhibitor contained in the negative electrode material is a content in the negative electrode material collected from a chemically converted lead-acid battery in the fully charged state by a method to be described later.

As the carbonaceous material contained in the negative electrode material, carbon black, graphite, hard carbon, soft carbon, and the like can be used. Examples of the carbon black include acetylene black, furnace black, and lamp black. Furnace black also includes ketjen black (product name). The graphite may be a carbon material including a graphite-type crystal structure and may be either artificial graphite or natural graphite.

The content of the carbonaceous material in the negative electrode material is, for example, preferably 0.05% by mass or more, and more preferably 0.2% by mass or more. On the other hand, the content is preferably 4.0% by mass or less, more preferably 3% by mass or less, and still more preferably 2% by mass or less. These lower and upper limits can be combined arbitrarily.

The content of barium sulfate in the negative electrode material is, for example, preferably 0.5% by mass or more, more preferably 1% by mass or more, and still more preferably 1.3% by mass or more. On the other hand, the content is preferably 3.0% by mass or less, more preferably 2.5% by mass or less, and still more preferably 2% by mass or less. These lower and upper limits can be combined arbitrarily.

Hereinafter, a method of quantifying the amounts of the organic shrinkage inhibitor, the carbonaceous material, and the barium sulfate contained in the negative electrode material will be described. Prior to quantitative analysis, a chemically converted lead-acid battery is fully charged and disassembled to obtain a negative electrode plate to be analyzed. The obtained negative electrode plate is washed with water and dried to remove the electrolyte solution in the negative electrode plate. (The washing with water is performed until it is confirmed that the color of the pH test paper does not change by pressing the pH test paper against the surface of the negative electrode plate washed with water. However, the washing with water is performed within two hours. The negative electrode plate washed with water is dried at 60°C ± 5°C in a reduced pressure environment for about six hours. When the sticking member is included in the negative electrode plate after drying, the sticking member is removed from the negative electrode plate by peeling). Next, the negative electrode material is separated from the negative electrode plate to obtain an uncrushed sample S.

### (Organic expander)

The uncrushed sample S is crushed, and the crushed sample S is immersed in a 1 mol/L NaOH aqueous solution to extract the organic expander. An insoluble component is removed from a NaOH aqueous solution containing the extracted organic expander by filtration. The obtained filtrate (hereinafter also referred to as a filtrate to be analyzed) is desalted, concentrated, and dried to obtain a powder of the organic expander (hereinafter also referred to as a powder to be analyzed). Desalting may be performed by immersing the filtrate in distilled water in a dialysis tube.

The organic expander is specified by obtaining information from an infrared spectral spectrum of the powder to be analyzed, an ultraviolet-visible absorption spectrum of a solution obtained by dissolving the powder to be analyzed in distilled water or the like, a nuclear magnetic resonance (NMR) spectrum of a solution obtained by dissolving the powder to be analyzed in a solvent such as heavy water, a pyrolysis gas chromatography-mass spectrometry (GC-MS) capable of obtaining information on individual compounds constituting the substance, or the like.

The ultraviolet-visible absorption spectrum of the filtrate to be analyzed is measured. The content of the organic expander in the negative electrode material is quantified using a spectral intensity and a calibration curve prepared in advance. When the structural formula of the organic expander to be analyzed cannot be exactly specified, and the calibration curve of the same organic expander cannot be used, the calibration curve is prepared using an available organic expander exhibiting an ultraviolet-visible absorption spectrum, an infrared spectral spectrum, an NMR spectrum, and the like similar to those of the organic expander to be analyzed.

### [Carbonaceous material and barium sulfate]

The uncrushed sample S is crushed, 50 ml of nitric acid having a concentration of 20% by mass is added to 10 g of the crushed sample S, and the mixture is heated for about 20 minutes to dissolve a lead component as lead nitrate. Next, a solution containing lead nitrate is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at 110°C ± 5°C. The filtered sample is a mixed sample of a carbonaceous material and barium sulfate. A mass (A) of the mixed sample is measured by subtracting the mass of the membrane filter from the total mass of the dried mixed sample and the membrane filter. Thereafter, the dried mixed sample is placed in a crucible together with the membrane filter, and the crucible is heated to a temperature of 700°C or higher. The remaining residue is barium oxide. A mass (B) of barium sulfate is determined by converting the mass of barium oxide to the mass of barium sulfate. The mass of the carbonaceous material is calculated by subtracting the mass B from the mass A.

The negative electrode plate can be formed in such a manner that a negative electrode current collector is filled with a negative electrode paste, which is then cured and dried to prepare a non-chemically converted negative electrode plate, and then the non-chemically converted negative electrode plate is chemically converted. The negative electrode paste is prepared by adding water and sulfuric acid to a lead powder and various additives and kneading them. In the curing process, it is preferable to cure the non-chemically converted negative electrode plate at room temperature or at a higher temperature and humidity.

The chemical conversion can be performed by charging the electrode plate group in a state where the electrode plate group including the non-chemically converted negative electrode plate is immersed in the electrolyte solution containing sulfuric acid in the container of the lead-acid battery. However, the chemical conversion may be performed before the lead-acid battery or the electrode plate group is assembled. The chemical conversion produces spongy lead.

### (Positive electrode plate)

The positive electrode plate of the lead-acid battery includes a positive current collector and a positive electrode material. The positive current collector can be formed by press-punching a sheet of lead or a lead alloy. The sheet is preferably a stretched sheet (also referred to as a rolled plate) subjected to stretching. The stretched sheet may be a uniaxially stretched sheet or a biaxially stretched sheet.

As the lead or lead alloy used for the positive current collector, a Pb-Ca alloy or a Pb-Ca-Sn alloy is preferred in terms of corrosion resistance and mechanical strength, and lead having a purity of three nines or higher may be used. The positive current collector may have lead alloy layers having different compositions, and a plurality of alloy layers may be used.

The positive electrode material contains a positive active material (lead dioxide or lead sulfate) that develops a capacity through an oxidation-reduction reaction. The positive electrode material may optionally contain an additive.

A non-chemically converted positive electrode plate is obtained in such a manner that a positive current collector is filled with a positive electrode paste, which is then cured and dried. Thereafter, the non-chemically converted positive electrode plate is converted chemically. The positive electrode paste is prepared by kneading a lead powder, an additive, water, sulfuric acid, and the like.

### (Electrolyte solution)

The electrolyte solution is an aqueous solution containing sulfuric acid and may be gelled as necessary. The specific gravity of the electrolyte solution in the chemically converted lead-acid battery in a fully charged state is, for example, 1.20 to 1.35 at 20°C and preferably 1.25 to 1.32.

### (Separator)

A separator is usually disposed between the negative electrode plate and the positive electrode plate. A nonwoven fabric, a microporous film, or the like is used as the separator. The nonwoven fabric is a mat in which fibers are intertwined without being woven and is mainly made of fibers. For example, 60% by mass or more of the separator is formed of fibers. As the fiber, glass fiber, polymer fiber, pulp fiber, or the like can be used. The nonwoven fabric may contain components in addition to the fibers, such as an acid-resistant inorganic powder and a polymer as a binder. The microporous film is a porous sheet mainly made of components except for fiber components and is obtained by, for example, extrusion molding a composition containing, for example, a pore-forming additive (polymer powder, oil, etc.) into a sheet shape and then removing the pore-forming additive to form pores. The microporous film is preferably made mainly of a polymer component. As the polymer material, a polyolefin such as polyethylene or polypropylene is preferred.

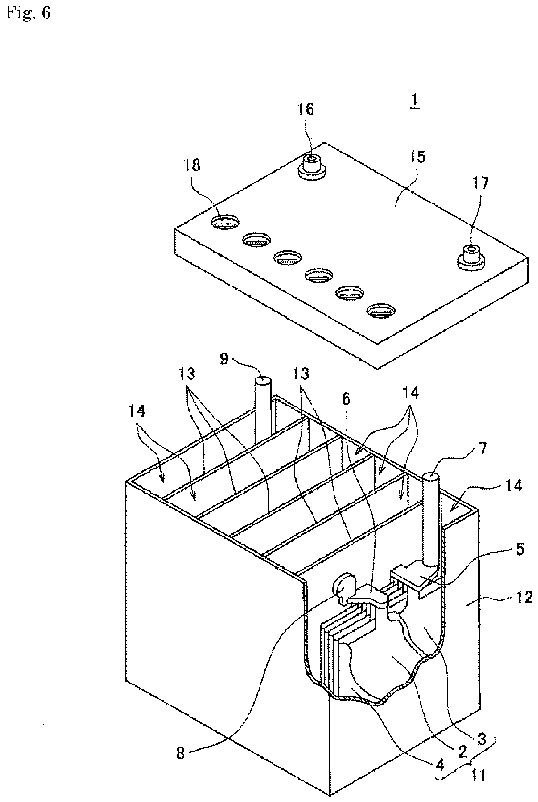

Fig. 6 is a perspective view of an external appearance of a lead-acid battery according to one embodiment of the present invention.

A lead-acid battery 1 includes a container 12 storing an electrode plate group 11 and an electrolyte solution (not shown). The inside of the container 12 is partitioned into a plurality of cell chambers 14 by partitions 13. In each cell chamber 14, one electrode plate group 11 is housed. The opening of the container 12 is closed with a lid 15 having a negative electrode terminal 16 and a positive electrode terminal 17. The lid 15 is provided with a vent plug 18 for each cell chamber. At the time of water addition, the vent plug 18 is removed to supply a water addition liquid. The vent plug 18 may have a function of discharging gas generated in the cell chamber 14 to the outside of the battery.

The electrode plate group 11 is configured by stacking a plurality of negative electrode plates 2 and positive electrode plates 3 with a separator 4 interposed therebetween. Here, the bag-shaped separator 4 storing the negative electrode plate 2 is shown, but the form of the separator is not particularly limited. In the cell chamber 14 located at one end of the container 12, a negative electrode shelf 6 for connecting lugs 2a of the plurality of negative electrode plates 2 in parallel is connected to a through-connector 8, and a positive electrode shelf 5 for connecting lugs 3a of the plurality of positive electrode plates 3 in parallel is connected to a positive electrode pole 7. The positive electrode pole 7 is connected to the positive electrode terminal 17 outside the lid 15. In the cell chamber 14 located at the other end of the container 12, a negative electrode pole 9 is connected to the negative electrode shelf 6, and the through-connector 8 is connected to the positive electrode shelf 5. The negative electrode pole 9 is connected to the negative electrode terminal 16 outside the lid 15. Each through-connector 8 passes through a through-hole provided in the partition 13 and connects the electrode plate groups 11 of the adjacent cell chambers 14 in series.

Although Fig. 6 shows an example of a flooded-type battery (vented battery), the lead-acid battery may be a valve regulated battery (VRLA type).

Next, the performance evaluation of the lead-acid battery will be described.

### (a) Test of five-hour-rate capacity retention ratio

In a water bath at 25°C ± 2°C, the test battery is discharged at a constant current (a current (A) 0.2 times the numerical value indicated as the rated capacity (Ah)) up to 1.75 V/cell and then charged at the constant current (the current (A) 0.2 times the numerical value indicated as the rated capacity (Ah)) up to 135% of the amount of discharge. The same cycle is repeated five times, and the percentage of the discharge capacity at the fifth cycle to the discharge capacity at the first cycle is defined as a five-hour-rate discharge capacity retention ratio.

### (b) Light-load life test

A light-load life test is performed in the following conditions using a test battery.

In order to make the overcharge condition higher than in a normal four-minute and ten-minute test specified in Japanese Industrial Standards (JIS) D 5301, a test of two-minute discharge and ten-minute charge (two-minute and ten-minute test) is performed at 75°C ± 2°C, and cold cranking ampere (CCA) performance is determined every 550 cycles.
Discharge: 25 A, 2 min.
Charge: 2.47V/cell, 25A, 10 minutes
Note that the method for determining CCA performance is in accordance with the provisions of JIS D 5301.

### (c) Test of positive electrode material utilization factor (performed in water bath at 25°C ± 2°C)

The battery is discharged at a constant current (a current (A) 0.2 times the numerical value indicated as the rated capacity (Ah)) up to 1.75 V/cell and then charged at the constant current (the current (A) 0.2 times the numerical value indicated as the rated capacity (Ah)) up to 135% of the amount of discharge to determine a five-hour-rate discharge capacity. This five-hour-rate discharge capacity is divided by the theoretical capacity of the test battery to obtain a positive electrode material utilization factor.

A lead-acid battery according to one aspect of the present invention is described as follows.
(1) One aspect of the present invention is a lead-acid battery including: a positive electrode plate; a negative electrode plate; and an electrolyte solution. The positive electrode plate includes a positive current collector and a positive electrode material held by the positive current collector. The negative electrode plate includes a negative current collector and a negative electrode material held by the negative current collector. The positive current collector has a frame rib, a lug provided on the frame rib, and inner ribs inside the frame rib. The frame ribs include an upper element continuous with the lug, a lower element facing the upper element, and a pair of side elements coupling the upper element with the lower element. The inner rib includes a longitudinal rib extending in a first direction from the upper element toward the lower element, and a transverse rib extending in a second direction from one of the side elements toward the other of the side elements. A striped pattern of a metallic fibrous structure is seen in a cross-section perpendicular to the first direction of the longitudinal rib. An outer peripheral region of the cross-section is made up of a first portion in which the fibrous structure extends along a contour of the cross-section and a second portion except for the first portion. In a cross-section of the positive electrode plate including the cross-section, a maximum thickness of the positive electrode material from the first portion to the surface of the positive electrode plate is 0.30 mm or more.
(2) A lead-acid battery in (1) above, in which in the cross-section of the positive electrode plate, the maximum thickness of the positive electrode material from the first portion to the surface of the positive electrode plate is 0.40 mm or more.
(3) A lead-acid battery in (1) or (2) above, in which in the cross-section of the positive electrode plate, the maximum thickness of the positive electrode material from the first portion to the surface of the positive electrode plate is 0.60 mm or less.
(4) A lead-acid battery in any of (1) to (3) above, in which a striped pattern of a metallic fibrous structure is seen in a cross-section perpendicular to the first direction of the longitudinal rib, an outer peripheral region of the cross-section is made up of a first portion in which the fibrous structure elongates along a contour of the cross-section and a second portion except for the first portion, and a percentage of a length of a contour corresponding to the second portion to a total length of a contour of the cross-section is less than 50%.
(5) A lead-acid battery in any of (1) to (3) above, in which a percentage of a length of a contour corresponding to the second portion to a total length of the contour of the cross-section is 40% or less.
(6) A lead-acid battery in any of (1) to (3) above, in which a percentage of a length of a contour corresponding to the second portion to a total length of the contour of the cross-section is 30% or less
(7) A lead-acid battery in any of (1) to (6) above, in which in the cross-section of the positive electrode plate, the minimum thickness of the positive electrode material from the first portion to the surface of the positive electrode plate is 0.10 mm or more.
(8) A lead-acid battery in any of (1) to (6) above, in which in the cross-section of the positive electrode plate, the minimum thickness of the positive electrode material from the first portion to the surface of the positive electrode plate is 0.50 mm or less.

A method for manufacturing the lead-acid battery according to any of (1) to (8) above, the method including the steps of: preparing the positive current collector to obtain the positive electrode plate including the positive current collector; and preparing the negative current collector to obtain the negative electrode plate including the negative current collector. The step of preparing the positive current collector includes the steps of preparing a rolled plate, punching the rolled plate to form an intermediate grid body having a plurality of intermediate ribs formed in a grid shape, and pressing the intermediate grid body from a thickness direction of the intermediate grid body to form at least some of the inner ribs. The pressing includes deforming at least some of the plurality of intermediate ribs so that at least one end in a rib width direction intersecting an extending direction of each of the intermediate ribs is thinner than a center in the rib width direction. In the step of obtaining the positive electrode plate, a maximum thickness of the positive electrode material from the first portion to the surface of the positive electrode plate in the cross-section of the positive electrode plate is 0.30 mm or more.

Embodiments of the present invention will be described more specifically below based on examples and comparative examples, but the present invention is not limited to the following examples.

### <<Example 1>>

### (1) Preparation of positive electrode plate

A rolled sheet of a Pb-Ca-Sn alloy is punched, and an inner rib is pressed to obtain a grid body A1 as a current collector. Next, a positive electrode paste containing lead powder is prepared, a current collector is filled with the positive electrode paste, and cured and dried to prepare a non-chemically converted positive electrode plate. The density of the positive electrode material after chemical conversion is adjusted to 3.6 g/cm³.

The specifications of the grid body A1 are as follows:
Inner rib thickness: 0.95 mm
Width of longitudinal rib in second direction: 0.80 mm
Width of transverse rib in first direction: 0.80 mm
Height H of frame rib: 115 mm
Width W of frame rib: 137 mm
Second-portion rate of section C: 40% (first-portion rate: 60%)

The specifications regarding the thickness of the positive electrode material are as follows:
Maximum thickness of positive electrode material from first portion to surface of positive electrode plate: 0.40 mm
Minimum thickness of positive electrode material from first portion to surface of positive electrode plate: 0.53 mm

### (2) Preparation of negative electrode plate

A negative electrode paste is prepared by mixing lead powder, water, diluted sulfuric acid, barium sulfate, carbon black, and an organic expander. A grid body A1 is filled with the negative electrode paste and cured and dried to obtain a non-chemically converted negative electrode plate.

### (3) Preparation of test battery

The test battery has a nominal voltage of 12 V and a rated five-hour-rate capacity of 30 Ah. The electrode plate group of the test battery is made up of six positive electrode plates and seven negative electrode plates sandwiching the positive electrode plates. The negative electrode plate is housed into a bag-shaped separator and stacking with the positive electrode plate to form an electrode plate group. The element was housed into a polypropylene container together with the electrolyte solution, and chemical conversion was performed in the container to prepare a flooded-type lead-acid battery X1.

### <<Examples 2 to 4>>

Batteries X2, X3, and X4 are prepared similarly to the battery X1, except that there are used current collectors with the maximum thickness of the positive electrode material from the inner rib to the surface of the positive electrode plate set to 0.30 mm, 0.50 mm, and 0.60 mm.

### <<Comparative Examples 1 and 2>>

Batteries Y1 and Y2 are prepared similarly to the battery X1, except that there are used current collectors with the maximum thickness of the positive electrode material from the first portion of the current collector to the surface of the positive electrode plate set to 0.10 mm and 0.20 mm.

### <<Examples 5 to 8>>

Batteries X5 to X8 are prepared similarly to the batteries X1 to X4, except that there are used current collectors with the second-portion rate of the section C set to 56%.

### <<Comparative Examples 3 and 4>>

Batteries Y3 and Y4 are prepared similarly to the batteries Y1 and Y2, except that there are used current collectors with the second-portion rate of the section C set to 56%.

### <<Examples 9 and 10>>

Batteries X9 and X10 are prepared similarly to the battery X1, except that there are used current collectors with the maximum thickness T and the minimum thickness t of the positive electrode material from the first portion to the surface of the positive electrode plate set as follows:
X9: T = 0.43 mm and t = 0.3 mm
X10: T = 0.33 mm and t = 0.2 mm

### <<Examples 11 and 12>>

Batteries X11 and X12 are prepared similarly to the battery X1, except that there are used current collectors with the second-portion rate of the section C set to 30%, and the maximum thickness T and the minimum thickness t of the positive electrode material from the first portion to the surface of the positive electrode plate set as follows:
X11: T = 0.49 mm and t = 0.3 mm
X12: T = 0.39 mm and t = 0.2 mm

### <<Examples 13 and 14>>

Batteries X13 and X14 are prepared similarly to the battery X1, except that there are used current collectors with the second-portion rate of the section C set to 17%, the maximum thickness T and the minimum thickness t of the positive electrode material from the first portion to the surface of the positive electrode plate set as follows:
X13: T = 0.55 mm and t = 0.3 mm
X14: T = 0.45 mm and t = 0.2 mm

### <<Example 15 and Comparative Example 5>>

Batteries X15 and Y5 are prepared similarly to the battery X1, except that there are used current collectors with the second-portion rate of the section C set to 56%, and the maximum thickness T and the minimum thickness t of the positive electrode material from the first portion to the surface of the positive electrode plate set as follows:
X15: T = 0.30 mm and t = 0.3 mm,
Y5: T = 0.2 mm and t = 0.2 mm

### <<Example 16>>

A battery X16 is prepared similarly to the battery X9, except that there is used a current collector with the maximum thickness of the positive electrode material from the first portion to the surface of the positive electrode plate set to 0.23 mm, and the minimum thickness of the positive electrode material from the first portion to the surface of the positive electrode plate set to 0.1 mm.

### <<Comparative Examples 6 to 8>>

Batteries Y6, Y7, and Y8 are prepared similarly to the battery X9, except that there are used current collectors with the maximum thickness of the positive electrode material from the first portion to the surface of the positive electrode plate and the minimum thickness of the positive electrode material from the first portion to the surface of the positive electrode plate set as follows:
Y6: T = 0.53 mm and t = 0.4 mm
Y7: T = 0.63 mm and t = 0.5 mm
Y8: T = 0.73 mm and t = 0.6 mm

Table 1 shows the results of the test of the five-hour-rate capacity retention ratio for batteries X1 to X8 and batteries Y1 to Y4.

**[Table 1]**

| Battery | Maximum thickness of positive electrode material from first portion to electrode plate surface (mm) | Second-portion rate (%) | Five-hour-rate capacity retention ratio (%) |
|---|---|---|---|
| X 1 | 0.4 | 40 | 99 |
| X 2 | 0.3 | 40 | 96 |
| X 3 | 0.5 | 40 | 99 |
| X 4 | 0.6 | 40 | 99 |
| Y 1 | 0.1 | 40 | 82 |
| Y 2 | 0.2 | 40 | 86 |
| X 5 | 0.4 | 56 | 75 |
| X 6 | 0.3 | 56 | 72 |
| X 7 | 0.5 | 56 | 76 |
| X 8 | 0.6 | 56 | 76 |
| Y 3 | 0.1 | 56 | 65 |
| Y 4 | 0.2 | 56 | 69 |

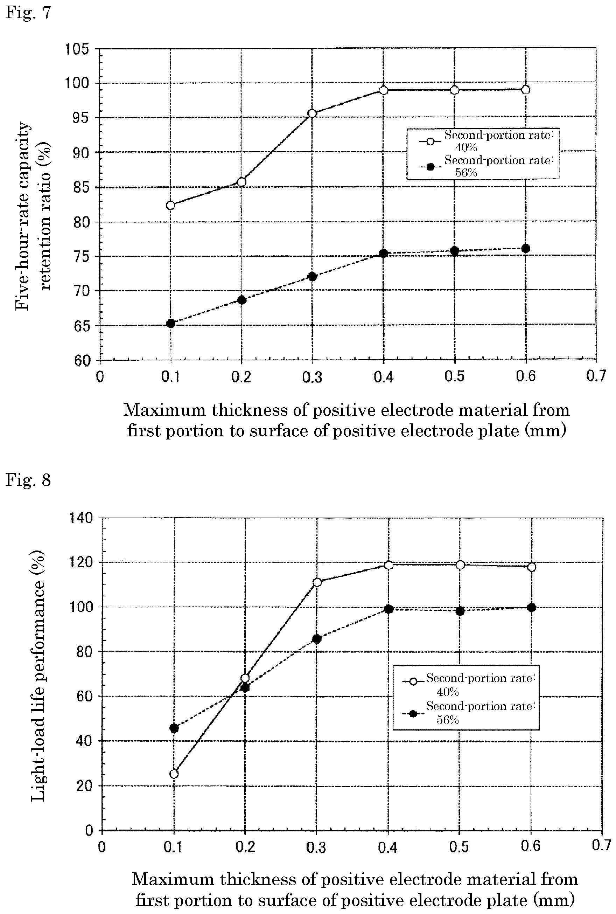

Fig. 7 shows the relationship between the maximum thickness of the positive electrode material from a first portion to the surface of the positive electrode plate and the five-hour-rate capacity retention ratio. It can be seen from Fig. 7 that when the maximum thickness of the positive electrode material from the first portion to the surface of the positive electrode plate is 0.3 mm or more, and the second-portion rate is 40%, the five-hour-rate capacity retention ratio is improved.

Table 2 shows the results of the light-load life test for the batteries X1 to X8 and the batteries Y1 to Y4.

**[Table 2]**

| Battery | Maximum thickness T of positive electrode material from first portion to surface of positive electrode plate (mm) | Second-portion rate (%) | Light-load life performance (%) |
|---|---|---|---|
| X 1 | 0.4 | 40 | 119 |
| X 2 | 0.3 | 40 | 111 |
| X 3 | 0.5 | 40 | 119 |
| X 4 | 0.6 | 40 | 118 |
| Y 1 | 0.1 | 40 | 25 |
| Y 2 | 0.2 | 40 | 68 |
| X 5 | 0.4 | 56 | 99 |
| X 6 | 0.3 | 56 | 86 |
| X 7 | 0.5 | 56 | 98 |
| X 8 | 0.6 | 56 | 100 |
| Y 3 | 0.1 | 56 | 46 |
| Y 4 | 0.2 | 56 | 64 |

Fig. 8 shows the relationship between the maximum thickness of the positive electrode material from the first portion to the surface of the positive electrode plate and the light-load life performance. Note that the light-load life performance is a percentage of the number of life cycles reached when the number of life cycles reached of the battery X8 is 100. It can be seen from Fig. 8 that when the maximum thickness of the positive electrode material from the first portion to the surface of the positive electrode plate is 0.3 mm or more, and the second-portion rate is 40%, the light-load life performance is improved.

Table 3 shows the results of the test of the five-hour-rate capacity retention ratio for batteries X9 to X15 and battery Y5.

**[Table 3]**

| Battery | Minimum thickness t of positive electrode material from first portion to surface of positive electrode plate (mm) | Second-portion rate (%) | Maximum thickness T of positive electrode material from first portion to surface of positive electrode plate (mm) | Five-hour-rate capacity retention ratio (%) |
|---|---|---|---|---|
| X 9 | 0.3 | 40 | 0.43 | 93 |
| X 10 | 0.2 | 40 | 0.33 | 90 |
| X 11 | 0.3 | 30 | 0.49 | 95 |
| X 12 | 0.2 | 30 | 0.39 | 92 |
| X 13 | 0.3 | 17 | 0.55 | 97 |
| X 14 | 0.2 | 17 | 0.45 | 94 |
| X 15 | 0.3 | 56 | 0.30 | 72 |
| Y 5 | 0.2 | 56 | 0.20 | 69 |

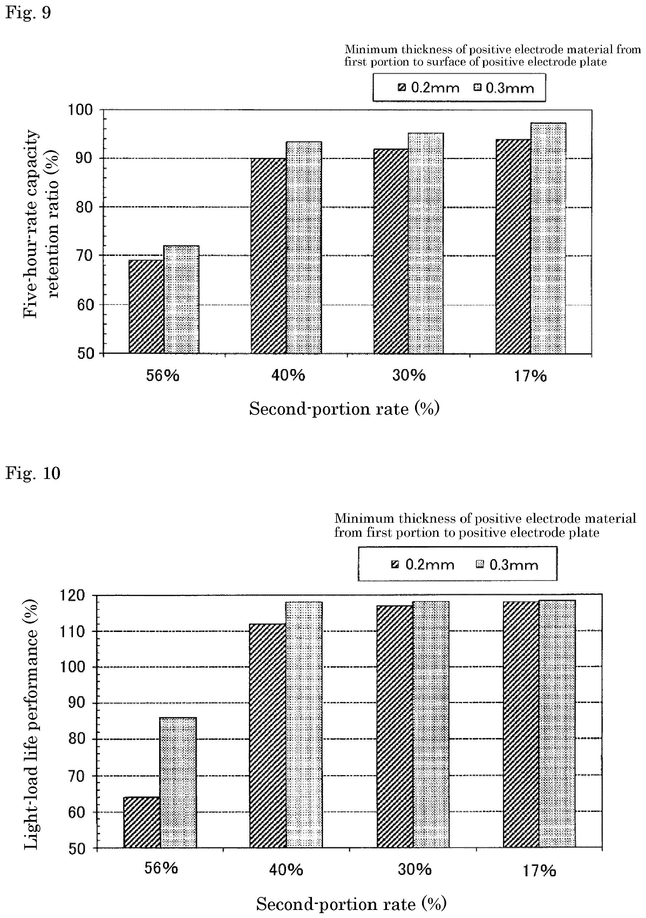

Fig. 9 shows the relationship between the second-portion rate of a longitudinal rib and the five-hour-rate capacity retention ratio. It can be seen from Fig. 9 that when the second-portion rate is lower than 40%, the five-hour-rate capacity retention ratio is improved. It can be seen that it is particularly favorable when the minimum thickness of the positive electrode material from the first portion to the surface of the positive electrode plate is 0.3 mm.

Table 4 shows the results of the light-load life test for the batteries X9 to X15 and Y5.

**[Table 4]**

| Battery | Minimum thickness t of positive electrode material from first portion to surface of positive electrode plate (mm) | Second -portion rate (%) | Maximum thickness T of positive electrode material from first portion to surface of positive electrode plate (mm) | Light-load life performance (%) |
|---|---|---|---|---|
| X 9 | 0.3 | 40 | 0.43 | 118 |
| X 10 | 0.2 | 40 | 0.33 | 112 |
| X 11 | 0.3 | 30 | 0.49 | 118 |
| X 12 | 0.2 | 30 | 0.39 | 117 |
| X 13 | 0.3 | 17 | 0.55 | 118 |
| X 14 | 0.2 | 17 | 0.45 | 118 |
| X 15 | 0.3 | 56 | 0.30 | 86 |
| Y 5 | 0.2 | 56 | 0.20 | 64 |

Fig. 10 shows the relationship between the second-portion rate of the longitudinal rib and the light-load life performance. Note that the light-load life performance is a percentage of the number of life cycles reached when the number of life cycles reached of the battery X8 is 100. It can be seen from Fig. 10 that when the second-portion rate is lower than 40%, the five-hour-rate capacity retention ratio is a favorable value. It can be seen that it is particularly favorable when the minimum thickness of the positive electrode material from the first portion to the surface of the positive electrode plate is 0.3 mm.

Table 5 shows the results of the test of the positive electrode material utilization factor for the batteries X9 to X10, X16, and Y6 to Y8.

**[Table 5]**

| Battery | Minimum thickness t of positive electrode material from first portion to surface of positive electrode plate (mm) | Second-portion rate (%) | Maximum thickness T of positive electrode material from first portion to surface of positive electrode plate (mm) | Positive electrode material utilization factor (%) |
|---|---|---|---|---|
| X 9 | 0.3 | 40 | 0.43 | 38 |
| X 10 | 0.2 | 40 | 0.33 | 42 |
| X 16 | 0.1 | 40 | 0.23 | 42 |
| Y 6 | 0.4 | 40 | 0.53 | 35 |
| Y 7 | 0.5 | 40 | 0.63 | 33 |
| Y 8 | 0.6 | 40 | 0.73 | 23 |

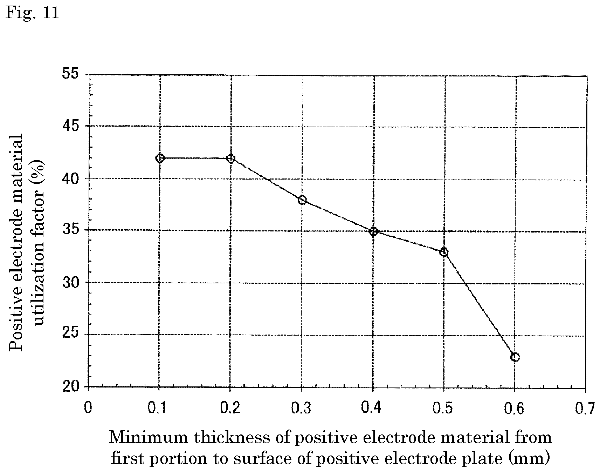

Fig. 11 shows the relationship between the minimum thickness t of the positive electrode material from the first portion to the surface of the positive electrode plate and the utilization factor of the positive electrode material. It can be seen from Fig. 11 that a high positive electrode material utilization factor can be obtained when the minimum thickness t of the positive electrode material from the first portion to the surface of the positive electrode plate is 0.5 mm or less. Further, it can be seen that when the minimum thicknesses t of the positive electrode material from the first portion to the surface of the positive electrode plate are 0.2 mm and 0.1 mm, the positive electrode material utilization factors are about the same.

### INDUSTRIAL APPLICABILITY

The lead-acid battery according to the present invention can be suitably used as a starting power source for an automobile, a motorcycle, or the like, and as a power source for an industrial energy storage apparatus for an electric vehicle (forklifts, etc.), or the like.

### DESCRIPTION OF REFERENCE SIGNS

A: inner rib
B: electrode plate surface
C: first portion
1: lead-acid battery
2: negative electrode plate
3: positive electrode plate
4: separator
5: positive electrode shelf
6: negative electrode shelf
7: positive electrode pole
8: through-connector
9: negative electrode pole
11: electrode plate group
12: container
13: partition
14: cell chamber
15: lid
16: negative electrode terminal
17: positive electrode terminal
18: vent plug
100: current collector
110: frame rib
111: upper element
112: lower element
113, 114: side element
120: inner rib
120A: longitudinal rib
120B: transverse rib
130: lug
132: lower protrusion (foot)
210: first portion
220: second portion

## Claims

1. A lead-acid battery comprising:
a positive electrode plate;
a negative electrode plate; and
an electrolyte solution,
wherein the positive electrode plate includes a positive current collector and a positive electrode material held by the positive current collector,
the negative electrode plate includes a negative current collector and a negative electrode material held by the negative current collector,
the positive current collector has a frame rib, a lug provided on the frame rib, and inner ribs inside the frame rib,
the frame ribs include an upper element continuous with the lug, a lower element facing the upper element, and a pair of side elements coupling the upper element with the lower element,
the inner rib includes a longitudinal rib extending in a first direction from the upper element toward the lower element, and a transverse rib extending in a second direction from one of the side elements toward the other of the side elements,
a striped pattern of a metallic fibrous structure is observed in a cross-section perpendicular to the first direction of the longitudinal rib,
an outer peripheral region of the cross-section is made up of a first portion in which the fibrous structure extends along a contour of the cross-section and a second portion except for the first portion, and
in a cross-section of the positive electrode plate including the cross-section, a maximum thickness of the positive electrode material from the first portion to a surface of the positive electrode plate is 0.30 mm or more.

2. The lead-acid battery according to claim 1, wherein a percentage of a length of a contour corresponding to the second portion to a total length of a contour of the cross-section perpendicular to the first direction of the longitudinal rib is less than 50%.

3. The lead-acid battery according to claim 1 or 2, wherein in the cross-section of the positive electrode plate, a minimum thickness of the positive electrode material from the first portion to the surface of the positive electrode plate is 0.10 mm or more.

4. The lead-acid battery according to claim 1 or 2, wherein in the cross-section of the positive electrode plate, a minimum thickness of the positive electrode material from the first portion to the surface of the positive electrode plate is 0.50 mm or less

5. The lead-acid battery according to claim 1 or 2, wherein in a cross-section of the positive electrode plate, a minimum thickness of the positive electrode material from the first portion to the surface of the positive electrode plate is 0.10 mm or more and 0.50 mm or less.

6. The lead-acid battery according to any one of claims 1 to 5, wherein in the cross-section of the positive electrode plate, the maximum thickness of the positive electrode material from the first portion to the surface of the positive electrode plate is 0.40 mm or more.

7. The lead-acid battery according to any one of claims 1 to 6, wherein in the cross-section of the positive electrode plate, the maximum thickness of the positive electrode material from the first portion to the surface of the positive electrode plate is 0.60 mm or less.

8. The lead-acid battery according to any one of claims 1 to 7, wherein in the cross-section of the positive electrode plate, the maximum thickness of the positive electrode material from the first portion to a surface of the positive electrode plate is 0.3 mm or more and 0.60 mm or less.

9. The lead-acid battery according to any one of claims 1 to 8, wherein a percentage of a length of a contour corresponding to the second portion to a total length of a contour of the cross-section perpendicular to the first direction of the longitudinal rib is 40% or less.

10. The lead-acid battery according to any one of claims 1 to 9, wherein a percentage of a length of a contour corresponding to the second portion to a total length of a contour of the cross-section perpendicular to the first direction of the longitudinal rib is 30% or less.

11. A method for manufacturing the lead-acid battery according to any one of claims 1 to 10, the method comprising the steps of:
preparing the positive current collector to obtain the positive electrode plate including the positive current collector; and
preparing the negative current collector to obtain the negative electrode plate including the negative current collector,
wherein the step of preparing the positive current collector includes the steps of
preparing a rolled plate,
punching the rolled plate to form an intermediate grid body having a plurality of intermediate ribs formed in a grid shape, and
pressing the intermediate grid body from a thickness direction of the intermediate grid body to form at least some of the inner ribs,
the pressing includes deforming at least some of the plurality of intermediate ribs so that at least one end in a rib width direction intersecting an extending direction of each of the intermediate ribs is thinner than a center in the rib width direction, and
in the step of obtaining the positive electrode plate, a maximum thickness of the positive electrode material from the first portion to a surface of the positive electrode plate in the cross-section of the positive electrode plate is 0.30 mm or more.
